# EUROPÄISCHE PATENTANMELDUNG

(11) **EP 1 384 811 A1**
(43) Veröffentlichungstag der Anmeldung: **28.01.2004**
(21) Anmeldenummer: 03016409.9
(22) Anmeldetag: 21.07.2003
(51) Int. Cl.: D21H 17/20, D21H 17/29, C08L 99/00, C08L 3/02

(54) **Mittel zur Erhöhung der Aufnahmefähigkeit von Papiermasse für Stärke**

(30) Priorität: 23.07.2002 DE 10233524
(71) Anmelder: Mühle Rüningen GmbH & Co. KG, 38122 Braunschweig (DE)
(72) Erfinder: Maczynski, Jan-Peter, 38302 Wolfenbüttel (DE); Plüschke, Frank Dipl.-Ök., 38124 Braunschweig (DE); Witt, Sigurd, 48527 Nordhom (DE)
(74) Vertreter: Ahrens, Gabriele, Dr.

(57) **Zusammenfassung**

Die vorliegende Erfindung betrifft ein Mittel zur Erhöhung der Aufnahmefähigkeit von Papier beziehungsweise Papiermasse in einem Faserbrei für die Papierherstellung für Stärke, wobei das Mittel Getreidemehl, und/oder Stärke, insbesondere Roggenmehl, zusammen mit einem Polymer mit Vinylamineinheiten enthält.

## Beschreibung

Die vorliegende Erfindung betrifft ein Mittel zur Erhöhung der Aufnahmefähigkeit von Papiermasse, wie sie für die Herstellung von Papier verwendet wird, für Stärke oder stärkehaltige Produkte.

Die vorliegende Erfindung eignet sich für den Einsatz in herkömmlichen Verfahren zur Herstellung von Papier, Pappe oder Karton und hierfür üblicherweise eingesetzte Vorrichtungen, wie sie allgemein bekannt sind.

Insbesondere eignet sich die vorliegende Erfindung für die Herstellung von Altpapier.

Als Ausgangsmaterial für die Papierherstellung wird eine wässrige Suspension aus den Ausgangsstoffen wie den fasrigen Bestandteilen und gegebenenfalls weiterer Papierhilfsmittel hergestellt. Die wässrige Suspension wird nachfolgend als Faserbrei bezeichnet, die darin enthaltenen Feststoffe als Papiermasse.

Es ist bekannt, der Papiermasse, aus der letztlich das Papierblatt erhalten wird, zur Verbesserung der Eigenschaften wie der Reißfestigkeit im Verlauf des Herstellungsprozesses Stärke als Leimungsmittel zuzusetzen.

Für die Papierherstellung wird der Faserbrei, der die Papiermasse - jedoch noch ohne Stärkezusatz - suspendiert erhält, bahnförmig auf ein bandförmiges Sieb gegeben, das Entwässerungselemente enthält. Nach teilweiser Entwässerung durchläuft die Bahn eine sogenannte Leimpresse, in der der Stärkeauftrag auf die bereits teilweise getrocknete Bahn erfolgt. Die Stärke wird dabei als wässrige Suspension aufgetragen, so dass sich der Feuchtegehalt und damit der Trocknungsaufwand bis zur fertigen getrockneten Papierbahn erhöht.

Wünschenswert wäre es daher, die Stärke bereits dem Faserbrei zuzusetzen. Damit könnte auf die Leimpresse und die zusätzlichen Trocknungsmaßnahmen verzichtet werden, wodurch der apparative und zeitliche Aufwand für die Papierherstellung und damit die Kosten entscheidend verringert werden könnten. Es wurden bereits Versuche unternommen, die Stärke dem Faserbrei zuzusetzen. Es hat sich jedoch gezeigt, dass die Stärke von der Papiermasse nur ungenügend aufgenommen wird, so dass der Stärkegehalt der erhaltenen Papierbahn zu gering ist, um die gewünschten Effekte, insbesondere Erhöhung der Reißfestigkeit zu erzielen.

Es war daher Aufgabe der vorliegenden Erfindung, eine Möglichkeit zur Verfügung zu stellen, mit der bereits dem Faserbrei Stärke derart zugesetzt werden kann, dass die resultierende Papierbahn einen ausreichenden Stärkegehalt aufweist, so dass bei der Papierherstellung auf die Leimpresse und den damit verbundenen, zusätzlich erforderlichen verfahrenstechnischen Aufwand verzichtet werden kann.

Erfindungsgemäß wird diese Aufgabe durch ein Mittel zur Erhöhung der Aufnahmefähigkeit von Papiermasse für Stärke gelöst, das Getreidemehl und/oder Stärke und ein Polymer mit Vinylamineinheiten enthält, wobei das Mittel erhältlich ist, indem das Getreidemehl und/oder die Stärke und das Polymer mit Vinylamineinheiten in einem Extruder vermischt werden.

Weiter betrifft die Erfindung ein Verfahren zur Papierherstellung, wobei dem Faserbrei ein Mittel enthaltend Getreidemehl und/oder Stärke und ein Polymer mit Vinylamineinheiten zugesetzt wird.

Zudem betrifft die Erfindung die Verwendung eines Mittels enthaltend Getreidemehl und/oder Stärke und ein Polymer mit Vinylamineinheiten zur Erhöhung des Stärkegehalts der Papiermasse, insbesondere im Faserbrei.

Getreidemehle enthalten einen hohen Anteil an Stärke, wobei der Anteil an Stärke und die Zusammensetzung der Stärke je nach Getreideart variieren kann.

Erfindungsgemäß bevorzugt wird Roggenmehl eingesetzt oder ein Mehl aus einer Getreideart, deren Anteil an Stärke und Zusammensetzung der Stärke dem von Roggen entspricht oder ähnlich ist.

Das Mehl kann ein kommerziell erhältliches Mehl sein.

Bevorzugt eingesetzte Stärken sind Stärke aus Roggenmehl oder eine Stärke, die in ihrer Zusammensetzung, insbesondere in ihrem Gehalt an Amylose und Amylopektin, der von Roggenstärke entspricht oder ähnlich ist.

Dem erfindungsgemäßen Mittel kann das Getreidemehl und/oder die Stärke jeweils in reiner Form oder in Mischung zugesetzt werden.

Das erfindungsgemäße Mittel enthält zusätzlich ein Polymer mit Vinylamineinheiten.
Hierbei kann es sich um ein Homo- oder Copolymer handeln.
Diese können auf an sich bekannte Weise durch Radikal-Polymerisation von N-Vinylcarbonsäureamiden und anschließender zumindest partieller Hydrolyse der Amidfunktion zu der entsprechenden Aminfunktion erhalten werden.
Beispiele für geeignete Monomere und Comonomere sowie Verfahren zur Herstellung von Polymeren mit Vinylamineinheiten finden sich in EP 0 553 135 B1, EP 0 758 344 B1, WO 98/45536 und WO 00/60167, auf die hierfür vollinhaltlich Bezug genommen wird.

Geeignete Polymere mit Vinylamineinheiten sind Polymere, die erhalten werden können durch Polymerisieren von N-Vinylcarbonsäureamiden der Formel 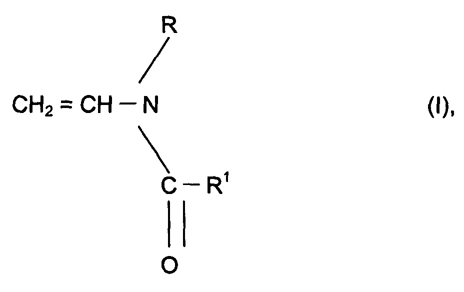 in der R, R¹=H oder C₁- bis C₆-Alkyl bedeuten, allein oder in Gegenwart von anderen damit copolymerisierbaren Monomeren und Hydrolyse der entstehenden Polymeren mit Säuren oder Basen unter Abspaltung der Gruppierung 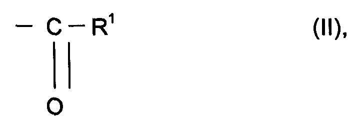 und unter Bildung der Vinylamineinheiten mit Formel 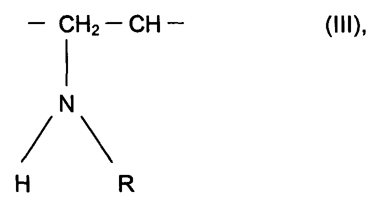 in der R die in Formel (I) angegebene Bedeutung hat.

Geeignete Monomere der Formel (1) sind beispielsweise N-Vinylformamid, N-Vinyl-N-methylformamid, N-Vinyl-N-ethylformamid, N-Vinyl-N-propylformamid, N-Vinyl-N-isopropylformamid, N-Vinyl-N-butylformamid, N-Vinyl-N-sek.butylformamid, N-Vinyl-N-tert.butylformamid, N-Vinyl-N-pentylformamid, N-Vinylacetamid, N-Vinyl-N-ethylacetamid und N-Vinyl-N-methylpropionamid, N-Vinylacetamid, N-Vinyl-N-methylacetamid, N-Vinyl-N-ethylacetamid, N-Vinylpropionamid, N-Vinyl-N-methylpropionamid und N-Vinyl-butyramid.

Erfindungsgemäß bevorzugt wird N-Vinylformamid 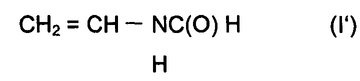 eingesetzt.

Copolymere der Monomeren (I) und (I') enthalten beispielsweise
1) 99 bis 1 Mol-% N-Vinylcarbonsäureamide der Formel (1) und
2) 1 bis 99 Mol-% andere, damit copolymerisierbare monoethylenisch ungesättigte Monomere.

Beispiele für copolymerisierbare monoethylenisch ungestättigte Monomere sind Vinylformiat, Vinylacetat, Vinylpropionat, N-Vinylpyrrolidon, Acrylsäure, Methacylsäure, Ester, Amide und Nitrile von Acrylsäure oder Methacrylsäure und die C₁ bis C₄-Alkylvinylether.

Bevorzugte Polymere mit Vinylamineinheiten sind hydrolysierte Copolymerisate aus
1) N-Vinylformamid (I') und
2) Vinylformiat, Vinylacetat, Vinylpropionat, Acrylnitril und N-Vinylpyrrolidon sowie hydrolysierte Homopolymerisate von N-Vinylformamid.

Der Hydrolysegrad der N-Vinylformamideinheiten in den Homo- und Copolymeren beträgt 2 bis 100 %, vorzugsweise 30 bis 100 %, und insbesondere 75 bis 100 Mol-%. Die Molmasse der Polymere mit Vinylamineinheiten beträgt bis zu 1 Million und liegt vorzugsweise in dem Bereich von 10.000 bis 600.000 und insbesondere bevorzugt in einem Bereich von 400.000 bis 500.000 (bestimmt durch Lichtstreuung).

Erfindungsgemäß bevorzugt werden Homopolymere eingesetzt, insbesondere des N-Vinylformamids.
Die bevorzugten Homopolymere sind vollständig hydrolisiert. Im Sinne der Erfindung umfasst der Begriff "vollständig hydrolysiert" auch im Wesentlichen vollständig hydrolysierte Polymere, wobei die Hydrolyse theoretisch vollständig verlaufen sein sollte, jedoch verfahrenstechnisch unvermeidbare Abweichungen vorliegen können.

Erfindungsgemäß besonders bevorzugte Polyvinylamine sind vollständig bzw. im Wesentlichen vollständig hydrolysierte Homopolymere aus N-Vinylformamid als Monomeren mit einer Molmasse in einem Bereich von 400.000 bis 500.000.
Ein geeignetes Beispiel hierfür wird von der Firma BASF unter der Produktbezeichnung "CATIOFAST VFH" vertrieben.

Das erfindungsgemäße Mittel enthält vorzugsweise 5 bis 30 Gew%, insbesondere 10 bis 25 Gew%, Polymer mit Vinylamineinheiten (bezogen auf das native Mehl mit seinem natürlichen Wassergehalt).
Je nach Bedarf kann das Mittel auch mehr oder weniger Polymer mit Vinylamineinheiten enthalten, solange gewährleistet ist, dass der Faserbrei den gewünschten Stärkegehalt aufweist.

Wird das Getreidemehl ganz oder teilweise durch Stärke ersetzt, sind die Gehaltsangaben entsprechend anzupassen.

Weiter kann das erfindungsgemäße Mittel noch Wasser enthalten, das entweder aus dem natürlichen Gehalt des Mehls oder der Stärke stammt und/oder im Zuge des Herstellungsverfahrens zugesetzt und bei der abschließenden Trocknung nicht vollständig entfernt wurde.

Je nach Bedarf kann das erfindungsgemäße Mittel Zusatzstoffe enthalten, wie sie für die Herstellung von Papier wünschenswert sein können.

Das erfindungsgemäße Mittel kann durch inniges Vermischen der Bestandteile, Mehl und/oder Stärke, Polymer mit Vinylamineinheiten, gegebenenfalls Wasser und optional weiterer Zusätze erhalten werden.
Die Vermischung erfolgt vorzugsweise in einem Extruder
Ein für die Extrusion geeigneter Extruder ist ein gleichläufiger Zweischneckenextruder. Ein Beispiel für einen geeigneten Zweischneckenextruder ist ein Extruder, wie er von der Firma Bühler unter der Produktbezeichnung BCTA vertrieben wird.

Der Extruder kann mit einem Vorkonditionierer gekoppelt sein.

Die Extrusion erfolgt üblicherweise bei einer Temperatur von 100 bis 170° C, insbesondere von 130 bis 155°C.

Die Extrusion erfolgt vorzugsweise unter Wasserzusatz. Das Wasser kann flüssig oder zumindest teilweise auch als Dampf, zum Beispiel über einen Vorkonditionierer, zugesetzt werden.
Der Wasserzusatz liegt üblicherweise bei bis zu 30 Gew%, vorzugsweise bei 5 bis 20 Gew%, bezogen auf den Gehalt an Mehl und/oder Stärke.

Das durch die Extrusion erhaltene Produkt kann dann in eine geeignete Form für die Anwendung gebracht werden. Beispielsweise kann es zu einem Granulat vermahlen werden. Die Korngröße des Granulats ist nicht weiter kritisch. Sie liegt üblicherweise in einer Größenanordnung von 0,5 bis einigen Millimetern, beispielsweise in einer Größenordnung von 0,75 mm.

Bei Bedarf kann das Extrudat wie das Granulat einer Trocknung unterzogen werden. Die Trocknung erfolgt vorzugsweise vor Abkühlung des Extrudats. Die Durchführung der Trocknung mit Abkühlung kann auf an sich bekannte übliche Weise erfolgen.

Ein erfindungsgemäß bevorzugtes Mittel wird durch Extrusion von Roggenmehl mit 10 bis 25 Gew% Polymer mit Vinylamineinheiten vorzugsweise unter einem Wasserzusatz von 5 bis 15 Gew%, jeweils bezogen auf den Gehalt an Roggenmehl, erhalten.

Das Granulat, das ein mit einem Polymer mit Vinylamineinheiten modifiziertes Getreidemehl und/oder Stärke enthält, wird dem Faserbrei für die Papierherstellung in einer Menge zugesetzt, die ausreicht, den Stärkegehalt der Papiermasse in der gewünschten Größe einzustellen.
Es hat sich gezeigt, dass die Papiermasse das mit einem Polymer mit Vinylamineinheiten modifizierte Getreidemehl und/oder Stärke hervorragend zurückzuhalten vermag, so dass eine Papierbahn erhalten werden kann, die den für eine ausreichende Reißfestigkeit erforderlichen Stärkegehalt aufweist. Erfindungsgemäß kann damit der Stärkezusatz über eine Leimpresse entfallen.

Im Falle eines erfindungsgemäßen Mittels, das Roggenmehl enthält, ist ein Zusatz ausreichend, der einer Menge von 3 bis 5 Gew% Roggenmehl bezogen auf den Faserbrei entspricht.

Die Erfindung umfasst auch ein verbessertes Verfahren zur Papierherstellung, wobei ein ausreichender Stärkegehalt der Papiermasse bereits im Faserbrei eingestellt werden kann, so dass auf ein Einbringen der Stärke auf die Papierbahn mittels Leimpresse verzichtet werden kann. Hierfür wird dem Faserbrei mit der Papiermasse für die Papierherstellung eine Menge an erfindungsgemäßem Mittel zugesetzt, die ausreicht, den gewünschten Stärkegehalt in der herzustellenden beziehungsweise fertig gestellten Papierbahn einzustellen. Wird beispielsweise ein erfindungsgemäß bevorzugtes Mittel verwendet, das erhalten wird durch Extrusion von Roggenmehl mit 10 bis 25 Gew% Polymer mit Vinylamineinheiten, ist ein Zusatz ausreichend, der 3 bis 5 Gew% Roggenmehl (bezogen auf den Faserbrei) entspricht.

Nachstehend wird die Herstellung des erfindungsgemäßen Mittels anhand von Beispielen näher erläutert.

Für die Durchführung der Beispiele wurde ein herkömmliches Roggenmehl sowie als Polymer mit Vinylamineinheiten CATIOFAST VFH der Firma BASF verwendet.

Alle Läufe der Versuchsreihen 1 bis 4 wurden mit einem Extruder BCTG der Firma Bühler mit einer gleichläufigen Doppelschnecke durchgeführt.
Dem Extruder war in den Versuchsreihen 2 bis 4 ein Vorkonditionierer BCTC der Firma Bühler vorgeschaltet, über den dem Extruder die einzelnen Bestandteile zugeführt wurden. Bei ausgewählten Läufen wurde zusätzlich Wasser als Wasserdampf über den Vorkonditionierer zugeführt (gesondert angegeben).

Es bedeuten:

| | |
|---|---|
| N | Schneckendrehzahl Umdrehungen /Min. (rpm) |
| WG | Wasserzusatz [Gew%] |
| VK | Vorkonditionierer |
| Polymer | Polymer mit Vinylamineinheiten [Gew%], bezogen auf Mehlgehalt |

Für die Versuchsreihen wurde Roggenmehl mit seinem natürlichen Wassergehalt verwendet.

### Versuchsreihe 1:

| **Parameter** | **Variation** |
|---|---|
| Baureihe des Extruders: DNDL | Gehäusedurchmesser (Extruder) konstant bei L/D 40 |
| Mehldurchsatz [kg/h] | konstant bei 50 |
| Polymer [Gew%] | 10; 17,5; 25 |
| N [rpm] | 100; 85; 70 |
| WG [Gew%] | 5; 10; 15 |

### Versuchsdurchführung:

| **Polymer** | **10** | | **17,5** | | | **25** | | |
|---|---|---|---|---|---|---|---|---|
| **WG/N** | **100** | **85** | **100** | **85** | **70** | **100** | **85** | **70** |
| 15 | 1 | | | | | 6 | | 8 |
| 10 | | 3 | | 4 | | | 5 | |
| 5 | 2 | | | | | 7 | | 9 |

| **Lauf** | **1** | **2** | **3** | **4** | **5** | **6** | **7** | **8** | **9** |
|---|---|---|---|---|---|---|---|---|---|
| N[rpm] | 100 | 100 | 85 | 85 | 85 | 100 | 100 | 70 | 70 |
| Massedruck [bar] | 45 | 50 | 55 | 51 | 50 | 40 | 50 | 50 | 65 |
| Extrusionstemp. [°C] | 145 | 165 | 151 | 136 | 138 | 136 | 148 | 126 | 138 |
| Cutter speed [%] | 50 | | | | | | | | |
| H₂O Ext. [kg/h] | 7,5 | 2,5 | 5 | 5,2 | 5 | 7,5 | 2,5 | 7,5 | 2,5 |
| Polymer Ext. [kg/h] | 5,1 | 5,1 | 5,1 | 8,7 | 12,5 | 12,5 | 12,5 | 12,5 | 12,5 |

Der Durchsatz an Mischung aus Mehl, Wasser und Polymer durch den Extruder betrug für die Läufe 1 bis 9 konstant 50 kg/h.
In den Läufen 1 bis 9 wurde der Anteil an Wasser und Polymer der zu extrudierenden Mischung in zwei Chargen zugesetzt, wobei ein Teil vor Eingabe in den Extruder zugeführt wurde und ein weiterer Teil der Mischung in dem Extruder zugesetzt wurde, in der vorstehenden Tabelle als "H₂O Ext." und "Polymer Ext." bezeichnet. Der Zusatz an "Polymer Ext." erfolgte hierbei über das Gehäuse 2 und der an "H₂O Ext." über Gehäuse 1 des aus 5 Gehäusen bestehenden Extruders.

### Versuchsreihe 2:

Bei den hier aufgeführten Läufen wurde die Roggenmehlzugabe konstant bei 200 kg/h gehalten. Die Polymerzugabe betrug konstant 10 Gew% der Mehlzugabe (20 kg/h).

In den Läufen 4, 5, 6 und 7 wurde Wasser als Wasserdampf zugesetzt. In den Läufen mit Schaltung "off" wurde Wasser (flüssig) und Polymer, jedoch kein Wasserdampf, über den Vorkonditionierer zugegeben.

Die Läufe wurden wie folgt durchgeführt:

| **VK** | | **off** | | **>95°C** | | |
|---|---|---|---|---|---|---|
| **N** | **WG** | **10** | **15** | **0** | **5** | **10** |
| 150 | | | | 8 | 6 | 7 |
| 200 | | 2 | 3 | | 5 | 4 |
| 250 | | 1 | | | | |

| **Lauf** | **1** | **2** | **3** | **4** | **5** | **6** | **7** | **8** |
|---|---|---|---|---|---|---|---|---|
| N[rpm] | 250 | 200 | 200 | 200 | 200 | 150 | 150 | 150 |
| Drehkraft [%] | 45 | 54 | 46 | 31 | 36 | 41 | 35 | 49 |
| Massedruck | 69 | 87 | 70 | 36 | 40 | 50 | 44 | 64 |
| Extrusionstemperatur [°C] | 155 | 155 | 147 | 146 | 155 | 152 | 148 | 159 |
| VK Temperatur [°C] | - | - | - | 98 | 99 | 99 | 99 | 100 |
| Roggenmehl [kg/h] | 200 | | | | | | | |
| Wasser [%] | 10 | 10 | 15 | 10 | 5 | 5 | 10 | - |
| Polymer [%] | 10 | 10 | 10 | 10 | 10 | 10 | 10 | 10 |

Das granulierte Extrudat wurde getrocknet und gekühlt, wobei es 5 Minuten in einem Trockner (OTW 50 der Firma Bühler) gesammelt wurde, dann noch weitere 5 Minuten im Trockner verweilte und anschließend in einen Kühler überführt wurde. Nach Abkühlung auf Raumtemperatur wurde das Granulat abgefüllt.

### Versuchsreihe 3:

| **VK** | | **off** | | | | | | **>95°C** | | | |
|---|---|---|---|---|---|---|---|---|---|---|---|
| **N** | **WG** | **5** | | | **10** | | **15** | **0** | | **5** | **10** |
| 150 | | 17 | | 16 | | | 15 | 19 | 20 | | 21 |
| 200 | | | | | 13 | 14 | | | | 18 | |
| 250 | | 10 | 11 | 12 | | | 9 | 23 | 24 | | |

| **Lauf** | **9** | **10** | **11** | **12** | **13** | **14** | **15** | **16** | **17** |
|---|---|---|---|---|---|---|---|---|---|
| N [rpm] | 250 | 250 | 250 | 250 | 200 | 200 | 150 | 150 150 | |
| Drehkraft [%] | 32 | 36 | 42 | 32 | 39 | 35 | 50 | 57 | 58 |
| Massedruck | 90 | 124 | 57 | 104 | 104 | 91 | 87 | 116 | 128 |
| Extrusionstemperatur [°C] | 134 | 163 | 168 | 154 | 149 | 140 | 135 | 146 | 158 |
| VK Temperatur [°C] | - | | | | | | | | |
| Roggenmehl [kg/h] | 200 | | | | | | | | |
| Wasser [%] | 15 | 5 | 5 | 5 | 10 | 10 | 15 | 5 | 5 |
| Polymer [%] | 10 | 10 | 15 | 15 | 10 | 15 | 10 | 15 | 10 |

| **Lauf** | **18** | **19** | **20** | **21** | **22** | **23** |
|---|---|---|---|---|---|---|
| N[rpm] | 200 | 150 | 150 | 150 | 250 | 250 |
| Drehkraft [%] | 29 | 43 | 38 | 33 | 33 | 28 |
| Massedruck | 46 | 61 | 60 | 47 | 47 | 47 |
| Extrusionstemperatur [°C] | 146 | 156 | 150 | 144 | 173 | 165 |
| VK Temperatur [°C] | 95 | 98 | 98 | 98 | 99 | 99 |
| Roggenmehl [kg/h] | | | | | | |
| Wasser[%] | 5 | - | - | 10 | - | - |
| Polymer [%] | 15 | 10 | 15 | 10 | 10 | 15 |

Die Trocknung und Kühlung des extrudierten Granulats wurde wie in Versuchsreihe 2 durchgeführt.

### Versuchsreihe 4:

Für die Versuchsreihe 4 wurde der Mehlzusatz variiert.

| | | | |
|---|---|---|---|
| Nr. 24 | Polymer: 10% | 250 kg/h | 150 rpm |
| Nr. 25 | Polymer: 10% | 300 kg/h | 200 rpm |
| Nr. 26 | Polymer: 10% | 400 kg/h | 250 rpm |

| **Lauf** | **24** | **25** | **26** |
|---|---|---|---|
| N[rpm] | 150 | 200 | 250 |
| Drehkraft [%] | 48 | 46 | 55 |
| Massedruck | 61 | 63 | 78 |
| Extrusionstemperatur [°C] | 151 | 154 | 157 |
| VK Temperatur [°C] | 95 | 93 | 89 |
| Roggenmehl [kg/h] | 250 | 300 | 400 |
| Wasser [%] | 5 | 5 | 5 |
| Polymer [%] | 10 | 10 | 10 |

Die Trocknung und Kühlung des granulierten Extrudats erfolgte wie in den vorhergehenden Versuchsreihen.

Im Ergebnis konnte festgestellt werden, dass durch Zusatz der in den Versuchsreihen 1 bis 4 erhaltenen Granulate der Stärkegehalt der Papiermasse in einem Faserbrei für die Papierherstellung ohne weiteres auf den gewünschten Gehalt eingestellt werden konnte, so dass ein Papier mit guter Reißfestigkeit erhalten werden konnte, ohne dass zusätzlich über eine Leimpresse weitere Stärke zugesetzt werden musste.
Damit kann mit Hilfe der vorliegenden Erfindung auf die Leimpresse und die dieser nachgeschalteten Vorrichtungselemente wie Trockenelemente vollständig verzichtet werden, so dass eine bedeutende Vereinfachung und Verbilligung der Maschinen für die Papierherstellung möglich ist.

## Patentansprüche

1. Mittel zur Erhöhung der Aufnahmefähigkeit von Papiermasse für Stärke enthaltend Getreidemehl und/oder Stärke und ein Polymer mit Vinylamineinheiten, das erhältlich ist, indem das Getreidemehl und/oder die Stärke und das Polymer mit Vinylamineinheiten in einem Extruder vermischt werden.

2. Mittel nach Anspruch 1,
**dadurch gekennzeichnet,**
**dass** das Mittel erhältlich ist, indem in einem Extruder Getreidemehl mit 5 bis 30 Gew% Polymer mit Vinylamineinheiten, bezogen auf das Getreidemehl, vermischt werden.

3. Mittel nach Anspruch 1 oder 2,
**dadurch gekennzeichnet,**
**dass** das Getreidemehl Roggenmehl ist.

4. Mittel nach einem der vorhergehenden Ansprüche,
**dadurch gekennzeichnet,**
**dass** die Stärke Roggenstärke ist.

5. Mittel nach einem der vorhergehenden Ansprüche,
**dadurch gekennzeichnet,**
**dass** das Polymer mit Vinylamineinheiten ein Homopolymer und/oder ein Copolymer ist.

6. Mittel nach einem der vorhergehenden Ansprüche,
enthaltend Roggenmehl und 5 bis 30 Gew% Polymer mit Vinylamineinheiten, bezogen auf den Gehalt Roggenmehl.

7. Mittel nach einem der vorhergehenden Ansprüche,
**dadurch gekennzeichnet,**
**dass** das Polymer mit Vinylamineinheiten ein vollständig hydrolysiertes Homopolymer des N-Vinylformamids ist.

8. Verfahren zur Herstellung eines Mittels zur Erhöhung der Aufnahmefähigkeit von Papiermasse für Stärke,
**dadurch gekennzeichnet,**
**dass** Getreidemehl und/oder Stärke und ein Polymer mit Vinylamineinheiten in einem Extruder vermischt werden.

9. Verfahren nach Anspruch 8,
**dadurch gekennzeichnet,**
**dass** zusätzlich Wasser zugesetzt wird.

10. Verfahren nach Anspruch 8 oder 9,
**dadurch gekennzeichnet,**
**dass** das Wasser ganz oder teilweise als Wasserdampf zugesetzt wird.

11. Verfahren nach einem der Ansprüche 8 bis 10,
**dadurch gekennzeichnet,**
**dass** als Getreidemehl Roggenmehl verwendet wird.

12. Verfahren nach einem der Ansprüche 8 bis 11,
**dadurch gekennzeichnet,**
**dass** der Gehalt an Polymer mit Vinylamineinheiten 5 bis 30 Gew%, bezogen auf den Anteil an Getreidemehl, beträgt.

13. Verfahren nach einem der Ansprüche 8 bis 11,
**dadurch gekennzeichnet,**
**dass** als Extruder ein Doppelschnecken-Extruder verwendet wird.

14. Verfahren nach einem der vorhergehenden Ansprüche 8 bis 13,
**dadurch gekennzeichnet,**
**dass** als Polymer mit Vinylamineinheiten ein vollständig hydrolysiertes Homopolymer des N-Vinylformamids verwendet wird.

15. Verwendung eines Mittels nach einem der Ansprüche 1 bis 7,
enthaltend Getreidemehl und/oder Stärke und ein Polymer mit Vinylamineinheiten zur Einstellung des Stärkegehalts in der Papiermasse eines Faserbreis für die Papierherstellung.

16. Verfahren zur Herstellung von Papier,
**dadurch gekennzeichnet,**
**dass** dem Faserbrei mit der Papiermasse ein Mittel nach einem der Ansprüche 1 bis 7 zugesetzt wird.
